(19) Europäisches Patentamt
European Patent Office
Office européen des brevets

(11) Publication number: **0 159 157**
**B1**

(12) **EUROPEAN PATENT SPECIFICATION**

(45) Date of publication of patent specification: **10.08.88**

(51) Int. Cl.[4]: **G 01 N 21/59,** G 01 N 21/53

(21) Application number: **85302194.7**

(22) Date of filing: **29.03.85**

(54) **Filter cleaning system for opacity monitor.**

(30) Priority: **30.03.84 US 595205**

(43) Date of publication of application:
**23.10.85 Bulletin 85/43**

(45) Publication of the grant of the patent:
**10.08.88 Bulletin 88/32**

(84) Designated Contracting States:
**DE FR GB IT SE**

(56) References cited:
**AT-B- 357 348**

(73) Proprietor: **THE BABCOCK & WILCOX COMPANY**
**1010 Common Street P.O. Box 60035**
**New Orleans Louisiana 70160 (US)**

(72) Inventor: **Hall, George R, II.**
**1917 Robindale**
**Wickliffe Ohio 44092 (US)**

(74) Representative: **Cotter, Ivan John et al**
**D. YOUNG & CO. 10 Staple Inn**
**London WC1V 7RD (GB)**

**EP 0 159 157 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a filter cleaning system for opacity monitors for monitoring an amount of light passing through a gas, for example for determining how much smoke is being emitted from a stack.

Monitors are known for measuring how much light is blocked by gases passing through a conduit or stack and therefore measuring the opacity of the gases. A light source and a light sensor lie on opposite sides of an optical path through the conduit or stack. This measurement of opacity for the gases is a measurement of the amount of particles or smoke in the gas.

Part of the optical path between the light source and light sensor is shielded by a pipe to avoid contamination of optical windows separating the light source and sensor from the contaminating environment of the conduit or stack. It is known to supply purging air to the pipes for keeping the optical windows clean and free of soiling or abrasion by particles in the conduit or stack being monitored. Such damage or contamination to the optical windows would produce false opacity readings.

It is known to first filter the purging air through two and three stage filters. These filters must frequently be cleaned and changed manually.

According to the present invention there is provided a filter cleaning system for an opacity monitor having a light source and a light sensor on opposite sides of an optical path for measuring the opacity of gas in the optical path, the filter cleaning system comprising calibration means operatively connected to the light source and sensor for calibrating the opacity monitor during a calibration period, a pair of protective pipes having facing open ends and lying on the optical path between the light source and sensor so that gas whose opacity is to be measured will pass between the open ends, a blower having an input for receiving air and an output for supplying air, a primary filter for filtering air to be supplied to the blower, valve means connected to the blower, to the primary filter and to the pair of protective pipes, the valve means having a first position for supplying purging air from the filter to the blower and from the blower to the protective pipes for purging the protective pipes, and a second position for supplying blow-down air through the blower to the primary filter for cleaning the primary filter, and control means connected to the calibration means and to the valve means for moving the valve means into its second position when the calibration means is activated to calibrate the opacity monitor during the calibration period.

The present invention thus provides a filter cleaning system for an opacity monitor which comprises an arrangement (e.g microprocessor electronics) that calibrates the monitor, (preferably automatically and periodically), and, at the same time, cause a cleaning cycle for the filter. This greatly extends filter life and utilises calibrating time during which purging air is not needed.

The calibration means may be provided with a second optical path containing air or a gas with substantially zero opacity, and transfer means for transferring the light source and sensor from the first-mentioned optical path to the second optical path.

In a preferred filter cleaning system embodying the invention and described hereinbelow, simple function blocks are combined to achieve the functions of initiating a calibration period and a blow-down period as well as calibrating the opacity monitor.The preferred filter cleaning system is simple in design, rugged in construction and economical to manufacture.

The invention will now be further described, by way of illustrative and non-limiting example, with reference to the accompanying drawings, in which:

Figure 1 is a schematic representation of an opacity monitor incorporating a filter cleaning system embodying the present invention;

Figure 2 is a block diagram showing part of a control arrangement for the filter cleaning system; and

Figure 3 is a timing diagram showing when various operations performed in the filter cleaning system begin and stop.

Figure 1 shows a filter cleaning system for an opacity monitor which effects an automatic and periodic cleaning of a primary intake filter 20 during a calibration period for the opacity monitor. While shown as a single filter, the primary intake filter 20 can in fact incorporate several filter stages.

The opacity monitor is used in conjunction with a conduit or stack l0 for determining the opacity of gases or smoke flowing through the stack in the upward direction in Figure 1. A first optical path or pathway is defined through the stack 10 by spaced-apart and axially aligned pipes 22 and 24 which have open facing ends. Light is supplied by a light source 26 through an optical window 28 that isolates the source from the gases in the stack 10, and passes through the stack 10 to a light sensor 30. The light sensor 30 also is isolated from the gases in the stack 10, in this case by a second optical window 32. For purposes of calibration, a "zero" pipe 34 extends through the stack and defines a second optical pathway. Air within the pipe 34, as well as in a housing 36 for the light source and a housing 38 for the light sensor 30, is maintained under clean conditions so that the opacity of the air in the second pathway is assumed to be zero. That is, the air is assumed to be substantially transparent.

Clean purging air is supplied to the interiors of the pipes 22 and 24 near the sides of the optical windows 28, 32 which are exposed to the contaminating gases in the stack 10. This air is drawn through the primary filter 20 by a blower 18.

Two three-way valves 40 and 42 separate an

output and input of the blower 18 from the pipes 22, 24 and the filter 20 respectively. During a "blow-down" period, the filter 20 is backwashed with air, which is also supplied by the blower 18, over dotted line pathways in the three-way valves 40, 42. Clean air for the blow-down or filter cleaning period is provided through a secondary filter 44 which is, during this period, connected to the input of the blower 18, the output of the blower 18 being connected to the filter 20.

The blow-down period is chosen to correspond to a calibration period during which the opacity monitor is calibrated.

Calibration of the opacity monitor is achieved by utilising motors 46 and 48 which are connected to the light source 26 and the sensor 30, respectively. The motors 46, 48 are activatable to rotate their shafts by 180° to move both the light source 26 and the light sensor 30 from the first optical path to the second optical path, that is, into alignment with the zero pipe 34. This is shown in a phantom line position in Figure 1. In this way, a zero opacity signal O 73 can be produced in the sensor 30 which corresponds to the measurement of zero opacity for the air in the zero tube 34.

Calibration filter means 50 is provided for moving a calibrated neutral density range filter 52 into the second optical pathway between the light source 26 and censor 30. The calibration filter 52 has a known optical value O 79 and produces an opacity signal O 91. In this way, a calibration factor O 80 can be calculated utilising measurements with the filter in and out of the second optical path. The relationship is:

$$O_F = \frac{O_C - O_O}{O_D} \qquad (1)$$

After the calibration period, the motors 46, 48 are activated to return the light source 26 and sensor 30 to the first optical pathway defined between the pipes 22, 24. In this position, the sensor 30 generates a measured opacity value O 95 which corresponds to the measured opacity of the smoke or gas passing through the conduit or stack 10.

As will be explained later, the true opacity $O_P$ can be calculated according to the relationship:

$$O_P = \frac{O_M - 0_O}{O_F} \qquad (2)$$

From this true opacity value at the measured light path, a true opacity O 78 can at the stack outlet be determined according to the relationship.

$$O_S = I - (1 - O_P)^F \qquad (3),$$

where F is the stack factor and equals the mean diameter of the stack putlet, that is the diameter of the outlet of the conduit 10 divided by the length of the measurement path, that is the distance between the ends of the pipes 22 and 24.

The three-way valves 40 and 42 are moved from their solid line positions to their dotted line positions during the blow-back or filter cleaning phase. This is done in appropriate timing with activation of the motors 46 and 48 as well as activation of the filter means 50. These controllable elements as well as the light source 26 and the sensor 30 are connected to a control 60.

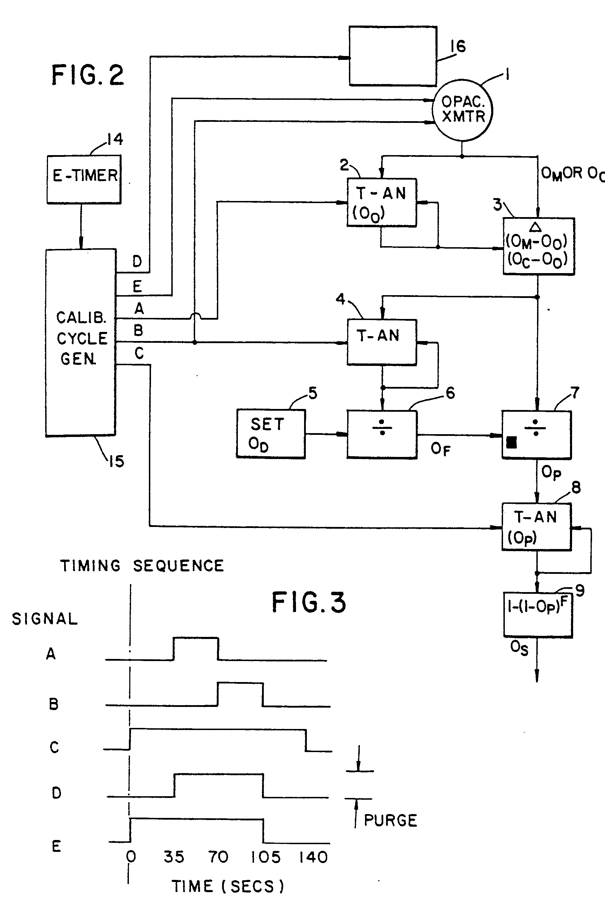

The controlling functions of the control 60 will now be explained in conjunction with Figures 2 and 3.

As shown in Figure 2, a timer 14, for generating signals when a calibration and filter cleaning operation should be instituted, is connected to a calibration cycle generator 15. The calibration cycle generator 15, which has outputs A to E, executes a sequence of operations to effect calibration and filter-cleaning.

At zero time as illustrated in Figure 3, outputs C and E change from logical zero to logical one. The output C is connected to a transfer function block 8 which holds the system output value, that is the true opacity measurement $O_P$ as its last value during the calibration cycle. The output E is connected to an opacity transmitter 1 which, in turn, is connected to the light sensor 30 as well as to the motors 46 and 48 to move the light source 26 and a sensor head of the light sensor from the first light pathway to the second light pathway, that is the phantom line representations in Figure 1 which are in alignment with the zero pipe 34.

The transfer is completed within 35 seconds, after which the next step can be taken.

At 35 seconds, the outputs A and D change from logical zero to logical one. The output A is connected to a transfer function block 2 which takes the zero opacity signal reading $O_O$ which is now being generated by the sensor 30 and supplied by the opacity transmitter 1 to the function block 2.

The output D initiates the purge system filter blow-down cycle as it is connected to purge means 16 which is connected to and controls the three-way valves 40 and 42 to start the flow of fresh purging air from the filter 44 to the filter 20.

The zero opacity signal stabilises within 35 seconds and blow-down continues during this interval.

At 70 seconds, the output A changes from logical one to logical zero.

This causes the function block 2 to hold its iast zero opacity signal $O_O$. At this point, the output B changes from logical zero to logical 1. The output B is connected to the opacity transmitter 1 and also to a transfer function block 4. The opacity transmitter 1 is also connected to the calibration means 50 and the output or signal B activates movement of the calibration neutral density range filter 52 into the second optical pathwayand thus in front of the zero pipe 34. (It should be

noted that the filter means 50 with the filter 52 might be positioned elsewhere on the second optical pathway, that is closer to the light source 26).

The output B also activates the transfer function block 4 to read the output of a function block 3 which takes the difference between the unscaled calibrated signal $O_C$ and the zero value signal $O_O$. The unscaled signal is provided by the sensor 30 over the transmitter 1 and the zero value is provided from the function block 2. The output of the function block 4 represents the range value of the opacity signal corrected for true zero. This signal stabilises within the interval from 70 to l05 seconds as shown in Figure 3. At l05 seconds, the outputs or signals B, D and E change from logical one to logical zero. The output of signal D transfers the purge means or system 16 from its "blowdown" stage to its "purge" stage. This is done by switching the three-way valves 40 and 42 back to their solid line positions, which allows the blower 18 to supply filtered air from the filter 20 to the pipes 22 and 24.

Simultaneously with this, the output B signals the transfer function block 4 to hold its last value and causes the transmitter 1 to activate the filter means 50 to remove the filter 52 from the second optical pathway.

The transfer occurs and the opacity measurement stabilises within the interval from l05 to 140 seconds.

At 140 seconds, the output C changes from logical one to logical zero, which signals the transfer function block 8 to read the opacity signal from a function block 7. The function block 7 and a function block 6 are dividing units. The function block 6 is connected to a set point block 5 which contains the known opacity value $O_D$ for the neutral density filter. This is divided by the output from the function block 4. The output of the function block 6 is thus equal to the calibration factor $O_F$ in accordance with Equation (1) above. The function block 7 operates to calculate the true opacity $O_P$ in accordance with Equation (2). This is because transfer out of the calibration phase causes the transmitter 1 to supply the measured opacity $O_M$ which is generated in the sensor 30.

A "power" function block 9 is connected to the output of the function block 8 to generate the true opacity $O_S$ in accordance with Equation (3). Note that the stack factor F is a known and constant value which is incorporated into the block 9. The output of the block 9 could be used in any known fashion and as part of the usual stack electronics.

**Claims**

1. A filter cleaning system for an opacity monitor having a light source (26) and a light sensor (30) on opposite sides of an optical path for measuring the opacity of a gas in the optical path, the filter cleaning system comprising:

calibration means operatively connected to the light source (26) and sensor (30) for calibrating the opacity monitor during a calibration period;

a pair of protective pipes (22, 24) having facing open ends and lying on the optical path between the light source (26) and sensor (30) so that the gas whose opacity is to be measured will pass between the open ends;

a blower (18) having an input for receiving air and an output for supplying air;

a primary filter (20) for filtering air;

valve means (40, 42) connected to the blower input and output, to the primary filter (20) and to the pair of protective pipes (22, 24), the valve means (40, 42) having a first position for supplying purging air from the primary filter (20) to the blower input and from the blower output to the protective pipes (22, 24) for purging the protective pipes, and a second position for supplying blowdown air to the blower input and from the blower input to the primary filter (20) for cleaning the primary filter; and

control means (60) connected to the calibration means and to the valve means (40, 42) for moving the valve means into the second position thereof when the calibration means is activated to calibrate the opacity monitor during the calibration period.

2. A filter cleaning system according to claim 1, wherein the calibration means includes a second optical path, a zero pipe (34) extending along the second optical path for maintaining substantially zero opacity along the second optical path, transfer means (46, 48) connected to the light source (26) and light sensor (30) for transferring the light source and light sensor between the first-mentioned and second optical paths, and calibration filter means (50) for moving a calibration filter (52) of known opacity into the second optical path, the control means (60) being connectd to the transfer means (46, 48) and to the calibration filter means (50) for transferring the light source (26) and sensor (30) from the first-mentioned optical path to the second optical path during the beginning of the calibration period and, during some point of the calibration period, moving the calibration filter (52) into the second optical path.

3. A filter cleaning system according to claim 2, wherein the control means (60) includes a calibration cycle generator (15), an opacity transmitter (1) connected to the light sensor (30), to the transfer means (46, 48) and to the calibration filter means (50) for receiving a signal from the light sensor (30) and for activating the transfer means (46, 48) and the calibration filter means (50), a first transfer function block (2) connected to the opacity transmitter (1) for receiving a signal from the light sensor (30), a difference block (3) connected to the opacity transmitter (1) and to the first transfer function block (2) for taking a difference between a signal from the first transfer function block (2) and a signal from the light sensor (30), a second transfer function block (4) connected to an output of the difference block (3), and calculation means connected to an output of the second transfer function block (4) and the output of the difference block (3) for calculating a true opacity of gas moving through the first mentioned optical

path as a function of a zero opacity reading taken on the second optical path, a known opacity reading taken through the calibration filter (52) and a dimensional factor which is a function of the distance between the open ends of the protective pipes (22, 24), the calibration cycle generator (15) including timing means (14) and having a first output (A) connected to the first transfer function block (2) for taking the zero opacity reading, a second output (B) connected to the opacity transmitter (1) and to the second transfer function block (4) for activating the calibration filter means (50) and taking the known opacity reading, a third output (C) connected to the calculation means for initiating the true opacity calculation, a fourth output (D) connected to the valve means (40, 42) for initiating cleaning of the primary filter (20), and a fifth output (E) connected to the opacity transmitter (1) for activating the transfer means (46, 48) for initiating the calibration period.

4. A filter cleaning system according to claim 3, wherein the calculation means comprises a first division unit (6) having a first input connected to the second transfer function block (4) and a second input connected to setting means (5) containing a value corresponding to the known opacity of the calibration filter (52), a second division unit (7) connected to an output of the first division unit (6) and an output of the difference block (3) for measuring a difference between the zero opacity reading and the known opacity reading, and for measuring the difference between a measured opacity reading through the first-mentioned optical path and the zero opacity reading, and a third transfer function block (8) connected to an output of the second division unit (7) and the third output (C) of the calibration cycle generator (15) for measuring a true opacity measurement as a function of the measured opacity reading, the zero opacity reading and the known opacity of the calibration filter (52).

5. A filter cleaning system according to claim 4, wherein the valve means (40, 42) comprises a first three-way valve (40) having an input connected to the blower output, a first output connected to the protective pipes (22, 24) and a second output connected to the primary filter (20), a second three-way valve (42) having an output connected to the blower input, a first input connected to the primary filter and a second input for receiving air, the first and second three-way valves (40, 42) being connected to the fourth output (D) of the calibration cycle generator (15), the first three-way valve (40) having its input connected to its first output and the second three-way valve having its output connected to its first input when the valve means is in the first position thereof, and the first three-way valve (40) having its input connected to its second output and the second three-way valve (42) having its output connected to its second input when the valve means is in the second position thereof.

6. A filter cleaning system according to claim 5, including a secondary filter (44) connected to the second input of the second three-way valve (42) for filtering blowdown air for the primary filter (20).

7. A filter cleaning system according to claim 2, wherein the valve means (40, 42) includes a first three-way valve (40) connected to the blower output and a second three-way valve (42) connected to the blower input, each of the first and second three-way valves (40, 42) having a first position corresponding to said first position of the valve means for supplying purging air through the primary filter (20) to the protective pipes (22, 24), and a second position corresponding to the second position of the valve means for supplying blowdown air to the primary filter (20).

**Patentansprüche**

1. Ein Filterreinigungssystem für einen Opazitätsmonitor mit einer Lichtquelle (26) und einem Lichtsensor (30) auf gegenüberliegenden Seiten eines optischen Weges zum Messen der Opazität eines Gases in dem optischen Weg, wobei das Filterreinigungssystem aufweist:

Kalibriermittel, die betrieblich mit der Lichtquelle (26) und dem Sensor (30) verbunden sind zum Kalibrieren des Opazitätsmonitors während einer Kalibrierperiode;

ein Paar von Schutzrohren (22, 24) mit einander zugewandten, offenen Enden, wobei die Rohre in dem optischen Weg liegen zwischen der Lichtquelle (26) und dem Sensor (30), so daß das Gas, dessen Opazität gemessen werden soll, zwischen den offenen Enden hindurchgehen kann;

ein Gebläse (18) mit einem Eingang zur Aufnahme von Luft und einem Ausgang für die Zuführung von Luft;

ein Primärfilter (20) zum Filtern von Luft;

Ventilmittel (40, 42), die mit dem Gebläseeingang und -ausgang, dem Primärfilter (20) und dem Paar von Schutzrohren (22, 24) verbunden sind, wobei das Ventilmittel (40, 42) eine erste position hat für das Zuführen von Ausblasluft aus dem Primärfilter (20) zum Gebläseeingang und aus dem Gebläseausgang zu den Schutzrohren (22, 24) zum Ausblasen der Schutzrohre, und eine zweite Position hat für das Zuführen von Einblasluft zum Gebläseeingang und aus dem Gebläseeingang zum Primärfilter (20) für die Reinigung des Primärfilters; und Steuermittel (60), die mit dem Kibriermittel und dem Ventilmittel (40, 42) verbunden sind zur Bewegung des Ventilmittels in seine zweite Position, wenn das Kalibriermittel eingeschaltet wird, um den Opazitätsmonitor während der Kalibrierperiode zu kalibrieren.

2. Filterreinigungssystem nach Anspruch 1, wobei das Kalibriermittel einen zweiten optischen Weg, ein Nullrohr (34), welches sich längs des zweiten optischen Weges erstreckt, um im wesentlichen eine Nullopazität längs des zweiten optischen Weges aufrechtzuerhalten, Überführungsmittel (46, 48), die mit der Lichtquelle (26) und dem Lichtsensor (30) verbunden sind zum Überführen der Lichtquelle und des Lichtsensors zwischen dem ersten erwähnten und zweiten optischen Weg sowie Kalibrierfiltermittel (50) aufweist, um ein Kalibrierfilter (52) bekannter Opazität in den zweiten optischen Weg zu bewegen, wobei das Steuermittel (60) mit dem Überführungsmittel (46, 48) und dem Kalibrierfiltermittel (50) verbunden ist, um die Lichtquelle (26) und den Sensor (30) aus dem ersten erwähnten optischen Weg zum zweiten optischen Weg während des Beginnens der Kalibrierperiode zu überführen und um während eines gewissen Abschnittes der Kalibrierperiode das Kalibrierfilter (52) in den zweiten optischen Weg zu bewegen.

3. Filterreinigungssystem nach Anspruch 2, wobei das Steuermittel (60) einen Kalibrierzyklusgenerator (15) aufweist, einen Opazitätstransmitter (1) aufweist, der mit dem Lichtsensor (30), dem Überführungsmittel (46, 48) und dem Kalibrierfiltermittel (50) verbunden ist, um ein Signal aus dem Lichtsensor (30) aufzunehmen und das Überführungsmittel (46, 48) und das Kalibrierfiltermittel (50) einzuschalten, einen ersten Überführungsfunktionsblock (2) aufweist, der mit dem Opazitätstransmitter (1) verbunden ist, um ein Signal aus dem Lichtsensor (30) aufzunehmen, einen Differenzblock (3) aufweist, der mit dem Opazitätstransmitter (1) und dem ersten Überführungsfunktionsblock (2) verbunden ist, um eine Differenz zwischen einem Signal aus dem ersten Überführungfunktionsblock (2) und einem Signal aus dem Lichtsensor (30) aufzunehmen, einen zweiten Überfürungsfunktionsblock (4) aufweist, der mit einem Ausgang des Differenzblocks (3) verbunden ist, und ein Rechenmittel aufweist, welches mit einem Ausgang des zweiten Überführungsfunktionslockes (4) und dem Ausgang des Differenzblockes (3) verbunden ist, um eine wahre bz. Istazität des Gases zu berechnen, welches sich durch den ersterwähnten optischen Weg bewegt als eine Funktion einer Nullopazitätsablesung, die auf dem zweiten optischen Weg aufgenommen wurde, einer bekannten Opazitätsablesung, welche über das Kalibrierfilter (52) aufgenommen wurde, und eines Abmessungsfaktors, der eine Funktion des Abstandes ist zwischen den offenen Enden der Schutzrohre (22, 24), wobei der Kalibrierzyklusgenerator (15) Zeitgebermittel (14) aufweist und einen ersten Ausgang (A) hat, der mit dem ersten Überführungsfunktionsblock (2) verbunden ist, um eine Nullopazitätsablesung aufzunehmen, einen zweiten Ausgang (B) hat, der mit dem Opazitätstransmitter (1) und dem zweiten Überführungsfunktionsblock (4) verbunden ist, um das Kalibrierfiltermittel (50 1 einzuschalten und das bekannte Opazitätsablesen aufzunehmen, einen dritten Ausgang (C) hat, der mit dem Rechenmittel verbunden ist für das Beginnen des Berechnens der Ist-Opazität, einen vierten Ausgang (D) hat, der mit dem Ventilmittel (40, 42 1 verbunden ist, um das Reinigen des Primärfilters (20) zu beginnen, und einen fünften Ausgang (E) hat, der mit dem Opazitätstransmitter (1) verbunden ist, um das Überführungsmittel (46, 48) für den Beginn der Kalibrierperiode einzuschalten.

4. Filterreinigungssystem nach Anspruch 3, wobei das Rechenmittel eine erste Teilereinheit (6) aufweist mit einem ersten Eingang, der mit dem zweiten Überführungsfunktionsblock (4) verbunden ist, und einem zweiten Eingang, der mit Einstellmitteln (5) verbunden ist, die einen Wert enthalten, welcher der bekannten Opazität des Kalibrierfilters (52) entspricht, eine zweite Teilereinheit (7) hat, die mit einem Ausgang der ersten Teilereinheit (6) und einem Ausgang des Differenzblockes (3) verbunden ist zum Messen einer Differenz zwischen der Nullopazitätsablesung und der bekannten Opazitätsablesung, und zum Messen der Differenz zwischen der gemessenen Opazitätsablesung über den est erwähnten optischen Weg und der Nullopazitätsablesung, und einen dritten Überführungsfunktionsblock (8) hat, der mit einem Ausgang der zweiten Teilereinheit (7) und dem dritten Ausgang (C) des Kalibrierzyklusgenerators (15) verbunden ist zum Messen einer Ist-Opazitätsmessung als Funktion der Ablesung der gemessenen Opazität, der Ablesung der Nullopazität und der bekannten Opazität des Kalibrierfilters (52).

5. Filterreinigungssystem nach Anspruch 4, wobei das Filtermittel (40, 42) ein erstes Dreiwegeventil (40) aufweist mit einem Eingang, der mit dem Gebläseausgang verbunden ist, einem ersten Ausgang, der mit den Schutzrohren (22, 24) verbunden ist, und einem zweiten Ausgang, der mit dem Primärfilter (20) verbunden ist, wobei ein zweites Dreiwegeventil (42) einen Ausgang hat, der mit dem Gebläseeingang verbunden ist, einen ersten Eingang hat, der mit dem primärfilter verbunden ist, und einen zweiten Eingang hat zur Aufnahme von Luft, wobei das erste und zweite Dreiwegeventil (40, 42) mit dem vierten Ausgang (D) des Kalibrierzyklusgenerators (15) verbunden ist, das erste Dreiwegeventil (40) seinen Eingang mit seinem ersten Ausgang verbunden hat und der Ausgang des zweiten Dreiwegeventils mit seinem ersten Eingang verbunden ist, wenn das Ventilmittel sich in seiner ersten position befindet, wobei der Eingang des ersten Dreiwegeventils (40) mit seinem zweiten Ausgang verbunden ist und der Ausgang des zweiten Dreiwegeventils (42) mit seinem zweiten Eingang verbunden ist, wenn das Ventilmittel sich in seiner zweiten Position befindet.

6. Filterreinigungssystem nach Anspruch 5, mit einem Sekundärfilter (44), welches mit dem zweiten Eingang des zweiten Dreiwegeventils (42) verbunden ist zum Filtern von Einblasluft für das Primärfilter (20).

7. Filterreinigungssystem nach Anspruch 2, wobei das Ventilmittel (40, 42) ein erstes Dreiwegeventil (40) aufweist, welches mit dem Gebläseausgang verbunden ist, und ein zweites Dreiwegeventil (42) aufweist, welches mit dem Gebläseeingang verbunden ist, wobei sowohl das erste als auch das zweite Dreiwegeventil (40, 42) eine erste Position hat, welche der ersten Position des Ventilmittels entspricht für das Zuführen von Ausblasluft durch das Primärfilter (20) zu den Schutzrohren (22, 24) sowie eine zweite Position, welche der zweiten Position des

Ventilmittels entspricht für das Zufüren von Einblasluft zum Primärfilter (20).

**Revendications**

1. Système de nettoyage de filtre pour moniteur d'opacité possédant une source de lumière (26) et un capteur de lumière (30) sur des côtés opposés d 'un trajet optique en vue de mesurer Iopacité dun gaz dans le trajet optique, système de nettoyage de filtre comportant:

des moyens d étalonnage reliés fonctionnellement à la source de lumière (26) et au capteur (30) en vue d étalonner le moniteur d'opacité durant une période d étalonnage;

une paire de tuyaux protecteurs (22,24) ayant des extrémités ouvertes tournées Iune vers l'autre et se trouvant sur le trajet optique entre la source de lumière (26) et le capteur (30) de sorte que le gaz dont Iopacité doit être mesurée passera entre les extrémités ouvertes.

une soufflerie (1 8) possédant une entrée en vue de recevoir de l'air et une sortie en vue de délivrer de l'air;

un filtre primaire (20) en vue de filtrer l'air;

des moyens de soupape (40,42) reliés à Ientrée et à la sortie de la soufflerie, au filtre primaire (20) et à la paire de tuyaux protecteurs (22, 24), les noye, ns de soupape (40,42) ayant une première position en vue de délivrer de l'air de purge provenant du filtre primaire (20) à Ientrée de la soufflerie et de la sortie de la soufflerie aux tuyaux protecteurs (22, 24) en vue de purger les tuyaux protecteurs, et une seconde position en vue de délivrer de Iair d inversion à l'entrée de la soufflerie et de l'entrée de la soufflerie au filtre primaire (20) en vue de nettoyer le filtre primaire; et

des moyens de commande (60) reliés aux moyens d étalonnage et aux moyens de soupape (40,42) pour déplacer les moyens de soupape dans la seconde position de ceux-ci lorsque les moyens d' étalonnage sont activés pour étalonner le moniteur dopacité durant la période détalonnage.

2. Système de nettoyage de filtre selon la revendication 1, dans lequel les moyens d étalonnage comprennent un second trajet optique, un tuyau de zéro (34) sétendant le long du second trajet optique en vue de maintenir sensiblement une opacité nulle le long du second trajet optique, des moyens de transfert (46,48) reliés à la source de lumière (26) et au capteur de lumière (30) en vue de transférer la source de lumière et le capteur de lumière entre les premier et second trajets optiques, et des moyens de filtre d étalonnage (50) en vue de déplacer un filtre d étalonnage (52) dopacité connue dans le second trajet optique, les moyens de commande (60) étant reliés aux moyens de transfert (46,48) et aux moyens de filtre détalonnage (50) en vue de transférer la source de lumière (26) et le capteur (30) depuis le trajet optique mentionné en premier lieu sur le second trajet optique durant le début de la période d étalonnage et, à un certain point de la période d étalonnage, de déplacer le filtre d'étalonnage (52) dans le second trajet optique 3.

Système de nettoyage de filtre selon la revendication 2, dans lequel les moyens de commande (60) comprennent un générateur de cycle d étalonnage (1 5), un transmetteur d 'opacité (1) relié au capteur de lumière (30), aux moyens de transfert (46,48) et aux moyens de, filtre d étalonnage (50) en vue de recevoir un signal du capteur de lumière (30) en vue dactiver les moyens de transfert (46,48) et les moyens de filtre d'étalonnage (50), un premier bloc de fonction de transfert (2) relié au transmetteur dopacité (1) en vue de recevoir un signal du capteur de lumière (30), un bloc de différence (3) relié au transmetteur dopacité (1) et au premier bloc de fonction de transfert (2) en vue de prélever une différence entre un signal provenant du premier bloc de fonction de transfert (2) et un signal provenant du capoteur de lumière (30), un second bloc de fonction de transfert (4) relié à une sortie du bloc de différence (3), et des moyens de calcul reliés à une sortie du second bloc de fonction de transfert (4) et à la sortie du bloc de différence (3) en vue de calculer une opacité vraie de gaz se déplaçant à travers le trajet nptique mentionné en premier lieu en fonction d'une lecture d'opacité nulle prélevée sur le second trajet optique, d'une lecture d'opacité connue prélevée à travers le filtre d'étalonnage (52) et d'un facteur dimensionnel qui est une fonction de la distance entre les extrémités ouvertes des tuyaux protecteurs (22,24), le générateur de cycle d'étalonnage (15) comprenant des moyens de synchronisation (14) et possédant une première sortie (A) reliée au premier bloc de fonction de transfert (2) en vue de prélever la lecture d'opacité nulle, une seconde sortie (B) reliée au transmetteur d'opacité (1) et au second bloc de fonction de transfert (4) en vue d'activer les moyens de filtre d'étalonnage (50) et de prélever la lecture d'opacité connue, une troisième sortie (C) reliée aux moyens de calcul en vue de déclencher le calcul d'opacité vraie, une quatrième sortie (D) reliée aux moyens de soupape (40,42) pour déclencher le nettoyage du filtre primaire (20), et une cinquième sortie (E) reliée au transmetteur d'opacité (1) en vue d'activer les moyens de transfert (46,48) pour déclencher la période d'étalonnage.

4. Système de nettoyage de filtre selon la revendication 3, dans lequel les moyens de calcul comportent une première unité de division (6) possédant une première entrée connectée au second bloc de fonction de transfert (4) et une seconde entrée connectée à des moyens de réglage (5) contenant une valeur correspondant à l'opacité connue du filtre d'étalonnage (52), une seconde unité de division (7) connectée à une sortie de la première unité de division (6) et à une sortie du bloc de différence (3) en vue de mesurer une différence entre la lecture d'opacité nulle et la lecture d'opacité connue, et en vue de mesurer la différence une lecture d'opacité mesurée à travers le trajet optique mentionné en premier lieu et la

lecture d'opacité nulle, et un troisième bloc de fonction de transfert (8) connecté à une sortie de la seconde unité de division (7) et à la troisième sortie (C) du générateur de cycle d'étalonnage (15) en vue de mesurer une mesure d'opacité vraie en fonction de la lecture d'opacité mesurée, de la lecture d'opacité nulle et de l'opacité connue du filtre d'étalonnage (52).

5. Système de nettoyage de filtre selon la revendication 4, dans lequel les moyens de soupape (40-42) comprennent une première soupape à trois voies (40) possédant une entrée reliée à la sortie de la soufflerie, une première sortie reliée aus tuyaux protecteurs (22,24) et une seconde sortie reliée au filtre primaire (20), une seconde soupape à trois voies (42) possédant une sortie reliée à l'entrée de la soufflerie, une première entrée reliée au filtre primaire et une seconde entrée en vue de recevoir de l'air, les première et seconde soupapes à trois voies (40,42) étant reliées à la quatrième sortie (D) du générateur de cycle d'étalonnage (15), la première soupape à trois voies (40) ayant son entrée reliée à sa première sortie et la seconde soupape à trois voies ayant sa sortie reliée à sa première entrée lorsque les moyens de soupape sont dans leur première position, et la première soupape à trois voies (40) ayant son entrée reliée à sa seconde sortie et la seconde soupape à trois voies (42) ayant sa sortie reliée à sa seconde entrée lorsque les moyens de soupape sont dans leur seconde position.

6. Système de nettoyage de filtre selon la revendication 5, comprenant un filtre secondaire (44) relié à la seconde entrée de la seconde soupape à trois voies (42) en vue de filtrer l'air d'inversion pour le filtre primaire (20).

7. Système de nettoyage de filtre selon la revendication 2, dans lequel les moyens de soupape (40,42) comprennent une première soupape à trois voies (40) reliée à la sortie de la soufflerie et une seconde soupape à trois voies (42) reliée à l'entrée de la soufflerie, chacune des première et seconde soupapes à trois voies (40,42) possédant une première position correspondant à ladite première position des moyens de soupape en vue de délivrer de l'air de purge à travers le filtre primaire (20) aux tuyaux protecteurs (22,24), et une seconde position correspondant à la seconde position des moyens de soupape pour délivrer de l'air d'inversion au filtre primaire (20).

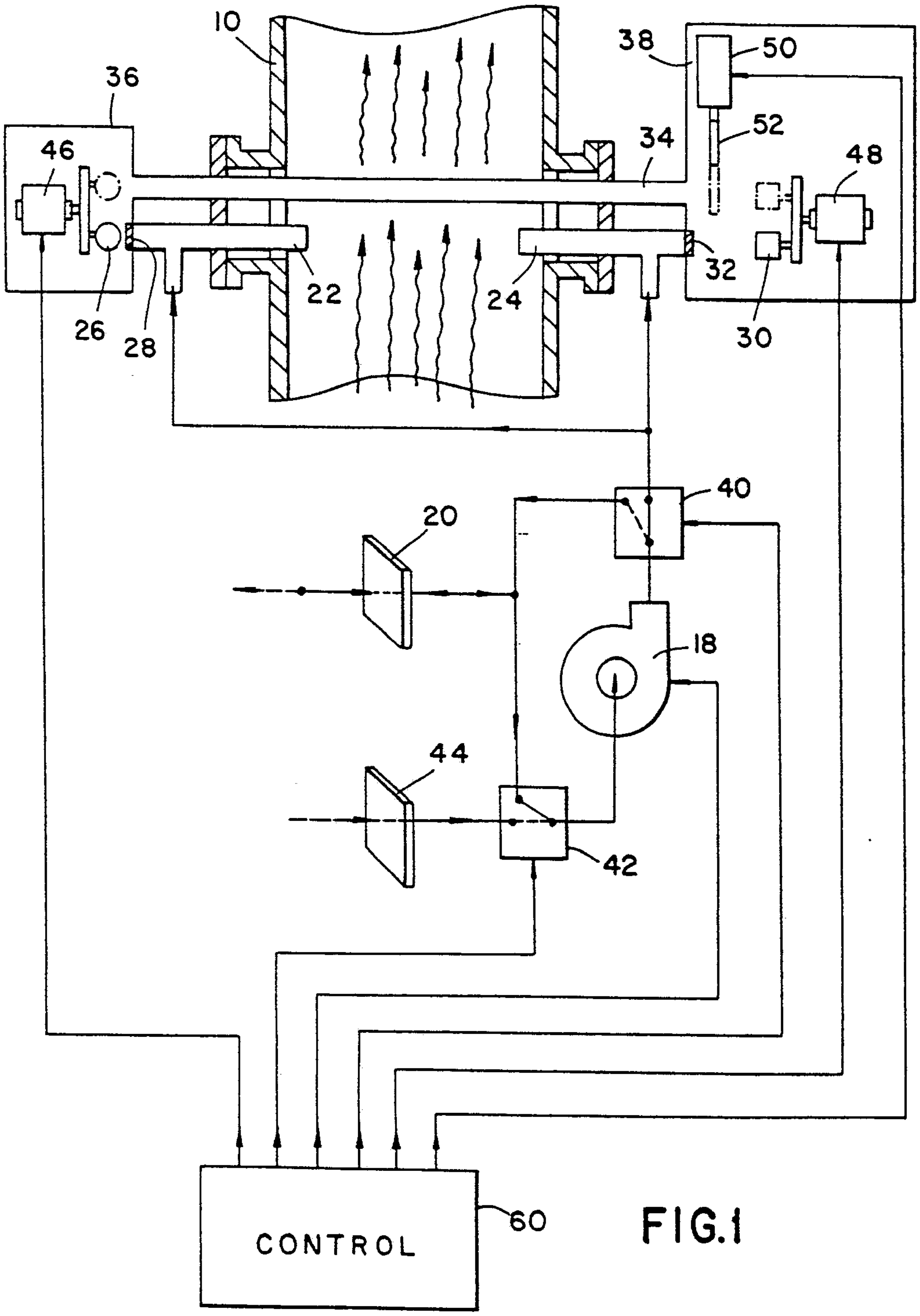


FIG.1

FIG. 2

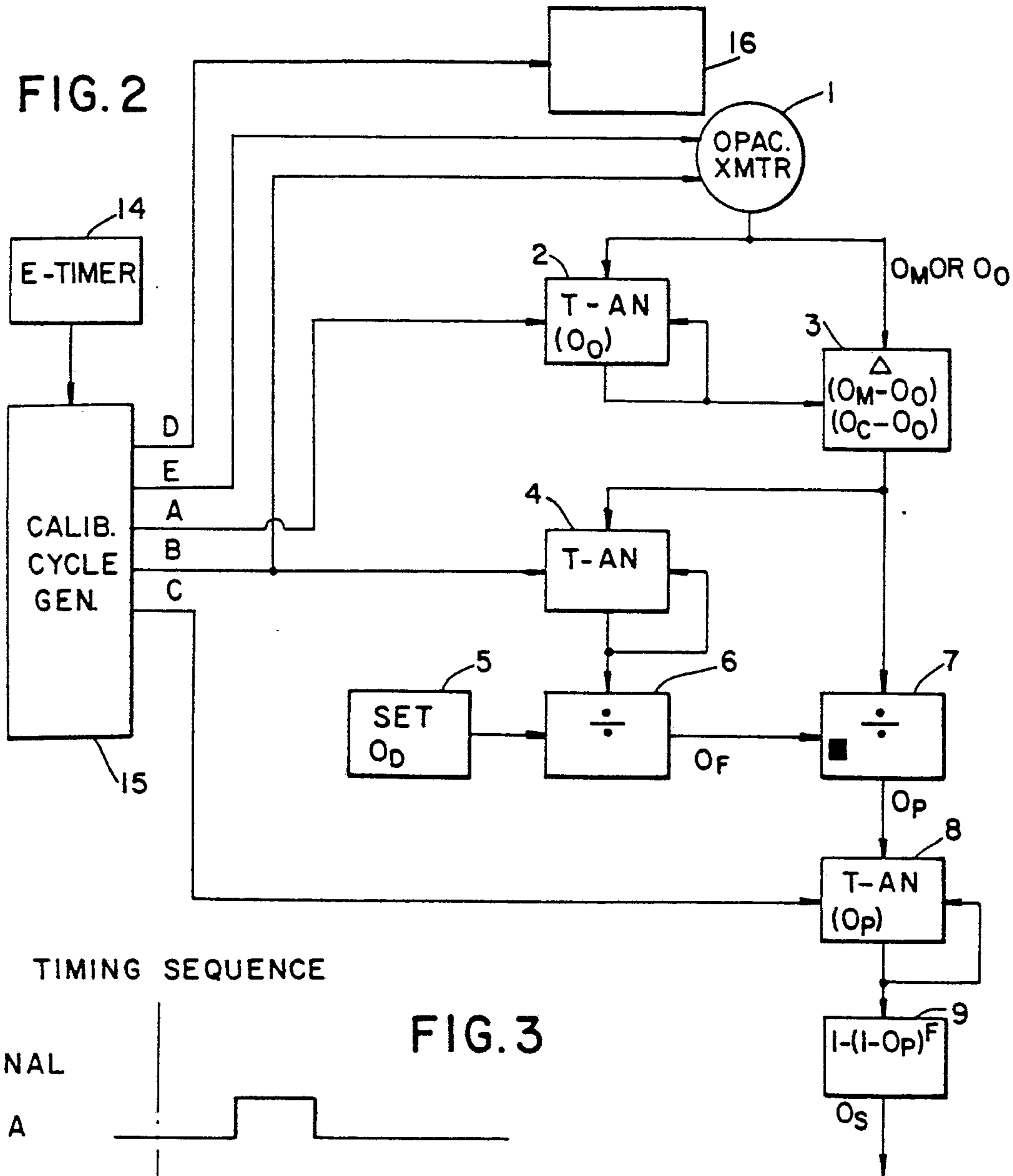


TIMING SEQUENCE

FIG. 3